# EUROPÄISCHE PATENTANMELDUNG

(11) **EP 0 825 354 A2**
(43) Veröffentlichungstag der Anmeldung: **25.02.1998**
(21) Anmeldenummer: 97112074.6
(22) Anmeldetag: 15.07.1997
(51) Int. Cl.: F16B 37/08

(54) **Mutter und Schraubenanordnung**

(30) Priorität: 20.08.1996 DE 19633541
(71) Anmelder: Dresselhaus Stuttgarter Schraubenhandel KG, 73660 Urbach (DE)
(72) Erfinder: Gröber, Hans-Dieter, 73770 Denkendorf (DE)
(74) Vertreter: Müller-Boré & Partner Patentanwälte

(57) **Zusammenfassung**

Vorgeschlagen wird eine Welle-Nabe-Verbindung mit einer Axialsicherung, insbesondere in Form eines Bolzens 2 und einer mit diesem zusammenwirkenden Mutter 4, bei welcher auf der Außenumfangsfläche der Welle 6 einerseits wenigstens eine in Umfangsrichtung radial ansteigende Keilfläche 8 und andererseits auf der Innenumfangsfläche der Nabe 4 eine entsprechende Anzahl von ebensolchen Keilflächen angeordnet sowie die Steigungen der nach einem Fügen von Welle 6 und Nabe 4 sich gegenüberliegenden Keilflächen 8 gleich sind, wobei auf der Außenumfangsfläche der Welle 6 und/oder der Innenumfangsfläche der Nabe 4 in axialer Richtung der Welle 6 bzw. Nabe 4 zusätzlich zu den Keilflächen 8 zumindest eine Erhebung 10 und/oder Vertiefung 12 angeordnet ist.

## Beschreibung

Die Erfindung betrifft eine Welle-Nabe-Verbindung, insbesondere in Form eines Bolzens und einer mit diesem zusammenwirkenden Mutter, wie sie im Anspruch 1 beschrieben ist.

Aus der DE 42 09 153 ist eine Welle-Nabe-Verbindung bekannt, bei welcher auf der Umfangsfläche der Welle eine Mehrzahl keilförmiger Erhebungen und auf der Innenfläche der Nabe die gleiche Anzahl entsprechender keilförmiger Ausnehmungen angeordnet ist, mit anderen Worten an den entsprechenden Stellen der Welle und der Nabe Keilflächen vorhanden sind. Dadurch, daß bei dieser bekannten Welle-Nabe-Verbindung die Steigung der Keilflächen im wesentlichen dem Verlauf einer logarithmischen Spirale folgt und flach ausgebildet ist, kann in Abhängigkeit von Material und Beschaffenheit der Oberflächen der Keilflächen eine Selbsthemmung zwischen Welle und Nabe erreicht werden.

Diese bekannte Verbindung ist im elastischen Bereich reibschlüssig ausgelegt. Die aufgrund des Reibschlusses entstehende Verbindung kann zwar unerwartet große Kräfte in Umfangsrichtung sowie in Axialrichtung übertragen. Dennoch besteht die Gefahr, daß bei großen axialen Kräften und insbesondere bei dynamischer Belastung ein Lösen der Verbindung in axialer Richtung stattfindet.

Es ist Aufgabe der vorliegenden Erfindung, die bekannte Welle-Nabe-Verbindung so weiterzubilden, daß auch bei großen axialen Kräften und insbesondere dynamischen axialen Kräften sich die Verbindung nicht lösen kann.

Die Aufgabe wird durch eine Welle-Nabe-Verbindung mit Axialsicherung gelöst, wie sie im Anspruch 1 beschrieben ist.

Zunächst sei erwähnt, daß unter einer Welle-Nabe-Verbindung sämtliche Konstruktionen bei denen zwei Bauteile durch Ineinanderfügen bzw. Fügen und anschließendes Relativverdrehen der Bauteile zueinander bis zum Reibschluß und darüber hinaus zu verstehen sind. Es kann sich dabei um statische Welle-Nabe-Verbindungen oder auch drehende Welle-Nabe-Verbindungen handeln. Insbesondere kann es sich um eine Art Schraube-Mutter-Verbindung handeln bzw. einen Bolzen und eine dazugehörige Mutter. Gemeinsames Merkmal der entsprechenden Verbindungen ist die stift- bzw. bolzenartige Ausbildung des einen Teils und die Ausbildung des anderen Teils mit einer Aufnahme bzw. Ausnehmung, in welche der Stift bzw. Bolzen eingreift, um mit diesem zusammenzuwirken.

Die auf der Außenumfangsfläche einerseits und andererseits auf der Innenumfangsfläche der Nabe angeordneten Keilflächen können auch als keilförmige Erhebungen bzw. keilförmige Ausnehmungen bezeichnet werden. Nach dem Ineinanderstecken von Welle und Nabe bzw. dem Einführen des Bolzens in die mit ihm zusammenwirkende Mutter kommen durch eine gegenseitige Relativbewegung der beiden Teile die jeweils gegenüberliegenden Keilflächen zur Anlage. Zum leichten Fügen der beiden Teile ist dabei vorteilhafterweise ein Spiel zwischen den betreffenden Außen- bzw. Innendurchmessern der miteinander zu verbindenden Teile vorgesehen. Nachdem die Keilflächen zur Anlage gekommen sind, entsteht durch eine weitere Relativbewegung ein selbsthemmender Reibschluß zwischen den Keilflächen und somit zwischen Welle und Nabe. Abhängig von dem eingeleiteten Drehmoment zur Relativbewegung zwischen Welle und Nabe kann die Größenordnung des Reibschlusses erhöht werden. Um diesen grundsätzlich angestrebten Effekt zu erlangen, sind die Steigungen der nach dem Fügen von Welle und Nabe sich gegenüberliegenden Keilflächen gleich, so daß sich bei Berührung der gegenüberliegenden Keilflächen alle Punkte der Keilflächen gleichzeitig berühren und zu tragen beginnen. Im Querschnitt gesehen erfolgt also eine linienförmige Berührung und nicht etwa nur eine punktförmige Berührung. Die gleichen Steigungen der sich gegenüberliegenden Keilflächen, die auch als Keilflächenpaare bezeichnet werden können, wird dadurch erreicht, indem die Keilflächen im wesentlichen dem Verlauf einer logarithmischen Spirale bezüglich der Achse von Welle bzw. Nabe folgen. Die angestrebte Axialsicherung wird erreicht, indem auf der Außenumfangsfläche der Welle und/oder der Innenumfangsfläche der Nabe in axialer Richtung von Welle bzw. Nabe zusätzlich zu den Keilflächen zumindest eine Erhebung und/oder Vertiefung vorgesehen ist. Die vorgeschlagene Erhebung bzw. Vertiefung kann beispielsweise durch Walzen der entsprechenden Umfangsflächen erreicht werden. Es versteht sich dabei, daß die Erhebung bzw. Vertiefung im Einspannbereich zwischen Welle und Nabe angeordnet ist. Die Erhebung kann auch als Rippe und die Vertiefung als Sicke bezeichnet werden. Nach erfolgter Berührung der zusammenwirkenden Keilflächenpaare wird zur Erzeugung eines selbsthemmenden Reibschlusses eine weitere bestimmbare Relativbewegung zwischen Welle und Nabe erzeugt, so daß einerseits die entsprechenden Keilflächen aufeinander laufen und sich andererseits zur Erzeugung der angestrebten Axialsicherung ein Formschluß im Bereich der Erhebung bzw. Vertiefung ergibt, indem sich die Rippe in das Material der Umfangsfläche des anderen Teiles einarbeitet bzw. das vorgenannte Material in die Vertiefung. Durch den somit erzeugten Formschluß ist die angestrebte Axialsicherung erreicht, die ein Lösen der Verbindung auch bei insbesondere dynamischer Belastung in axialer Richtung gewährleistet.

Vorzugsweise ist der radiale Abstand der Erhebung und/oder Vertiefung zur Achse der Welle bzw. Nabe in deren Umfangsrichtung konstant und/oder radial ansteigend. Welcher radiale Abstand letztlich gewählt wird, hängt auch von dem gewählten Herstellungsverfahren für die Erhebung bzw. Vertiefung ab, wobei mit den vorgenannten Konfigurationen jeweils die angestrebte Axialsicherung erreicht werden kann.

Mit Vorteil sind die Erhebung und/oder Vertiefung lediglich abschnittsweise über einen Teil der jeweiligen Umfangsfläche von Welle bzw. Nabe angeordnet. Es ist demnach nicht erforderlich, die Erhebung bzw. Vertiefung über den gesamtem Umfang von Welle bzw. Nabe auszubilden, da die angestrebte Axialsicherung auch mit einer lediglich abschnittsweisen Anordnung an der entsprechenden Umfangsfläche erreicht werden kann.

Zweckmäßigerweise sind mehrere Erhebungen und/oder Vertiefungen hintereinander in Längsrichtung auf der Welle bzw. Nabe angeordnet. Mit besonderem Vorteil sind Erhebungen und Vertiefungen abwechselnd hintereinander angeordnet, so daß eine Art Gewinde entsteht. Bei abschnittsweiser Anordnung der Erhebungen bzw. Vertiefungen und der Anordnung von mehreren abwechselnd hintereinander angeordneten Erhebungen und Vertiefungen entsteht eine Art Teilgewinde, wie dies beispielsweise auch bei einem Gewindeschneider der Fall ist. Sofern die Erhebungen und Vertiefungen abwechselnd hintereinander angeordnet sind, ist es von Vorteil, wenn das Rippenmaß und das Sickenmaß von gleichem Betrag sind, also im Längsschnitt durch die Welle bzw. Nabe und somit im Querschnitt durch Rippe bzw. Sicke die Tiefe der Sicke von gleichem Betrag ist, wie die Höhe der Rippe. Dieses Maß kann sich in Umfangsrichtung gegebenenfalls auch ändern, ist dann jedoch im Längsschnitt stets von gleicher Größenordnung. Die angestrebte Axialsicherung wird aber auch in dem Fall erreicht, in welchem hintereinander lediglich mehrere Erhebungen oder lediglich mehrere Vertiefungen vorgesehen sind. Hier empfiehlt es sich auch schon aus herstellungstechnischen Gründen, die entsprechenden Sickenmaße bzw. Rippenmaße im Längsschnitt vom Betrag her wiederum vorzugsweise gleich zu halten.

Hinsichtlich der Konfiguration der Erhebungen und/oder Vertiefungen ist es zweckmäßig, diese, im Längsschnitt von Welle bzw. Nabe gesehen, hinsichtlich ihres Querschnittes abgerundet oder spitz zulaufend auszubilden. Im Längsschnitt von Welle bzw. Nabe gesehen, also im Querschnitt durch die Erhebung bzw. Vertiefung, kann demnach ein kreisförmiger, ovaler oder auch dreieckförmiger Querschnitt von Vorteil sein. Bei einem dreieckförmigen Querschnitt und somit einem spitzen Zulaufen beispielsweise der Rippe kann das Eindringen der Rippe in das Material des gegenüberliegenden Teiles noch leichter erreicht werden.

Weiterhin kann es von Vorteil sein, wenn die Erhebungen und/oder Vertiefungen am Beginn einer Keilfläche, also an deren weitesten Abstand bzw. höchsten Punkt von der Achse der Welle bzw. dem nähesten Abstand bzw. tiefsten Punkt von der Achse der Nabe, angeordnet sind. Diese bevorzugte Anordnung gewährleistet das Wirken der Erhebungen bzw. Vertiefungen auch für den Fall, in dem eine Relativbewegung nach einem Berühren der entsprechenden Bauteile auch um einen geringeren Betrag also einen kleineren Drehwinkel, vorgesehen ist.

Zweckmäßigerweise ist der radiale Abstand der Erhöhungen von der Achse der Welle bzw. Nabe aus gesehen, größer als der maximale radiale Abstand der Keilflächen von dem entsprechenden Bezugspunkt. Für diese bevorzugte Ausgestaltung gleiten beim Fügen von Welle und Nabe zunächst Flächen aneinander, die Erhöhungen bzw. Vertiefungen aufweisen, so daß es nach einem Relativverdrehen sofort zu einem Forschluß kommt, bevor nach einem weiteren Relativverdrehendie Keilflächen anfangen zu wirken. Nichtsdestoweniger kann die angestrebte Axialsicherung aber auch mit radialen Abständen der Erhöhungen bzw. Vertiefungen erreicht werden, die dem maximalen radialen Abstand der Keilflächen entsprechen oder gar kleiner sind als diese.

Besonders bevorzugt sind die Erhöhungen und/oder Vertiefungen unter einem bestimmten Winkel zur Längsachse der Welle bzw. Nabe geneigt. In dieser bevorzugten Ausgestaltung und bei Anordnung von abwechselnd hintereinanderliegenden Erhebungen und Vertiefungen können insoweit klassische Gewindegänge an den entsprechenden Umfangsflächen vorgesehen seien. Während bei einem Verlauf der Erhöhungen bzw. Vertiefungen senkrecht zur Längsachse von Welle bzw. Nabe die angestrebte Axialsicherung erreicht werden kann, ist es bei geneigter Ausbildung unter einem bestimmten Winkel zur Längsachse der Welle bzw. Nabe möglich, bei der Welle-Nabe-Verbindung auch eine axiale Anzugskraft, wie dies bei einer normalen Gewindeschraube der Fall ist, zu erreichen. Folglich kann somit eine Vorspannung auf zu verspannende Bauteile aufgebracht werden. Eine solche Ausbildung, die eine Vorspannkraft oder auch eine axiale Kraftkomopnente erzeugt, kann insoweit einerseits die Vorteile der kreiskeilförmigen Ausbildung von Welle und Nabe zusammen mit einer axialen Vorspannkraft zuzüglich zur angestrebten Axialsicherung ermöglichen.

Schließlich ist es zweckmäßig, wenn das Material der Keilflächen, die nach dem Fügen von Welle und Nabe den Erhöhungen bzw. Vertiefungen gegenüberliegt, weicher ist als das Material der Erhöhungen und/oder Vertiefungen. Für diesen vorteilhaften Unterschied in der Härte der entsprechenden Materialien kann beispielsweise das Eindringen einer Erhöhung bzw. Rippe in das gegenüberliegende Material des anderen Bauteiles erleichtert werden, wobei bei vorzugsweise abwechselnd hintereinander angeordneten Erhöhungen und Vertiefungen das durch die Rippe verdrängte Material in die benachbarte Sicke eindringt. Hier zeigt sich auch der Vorteil, wenn das vorgenannte Rippen- und Sickenmaß von gleichem Betrag sind. Zweckmäßigerweise werden die Sicken und Rippen nur an einem der zu paarenden Bauteile angebracht. Die Gegenform wird beim Relativverdrehen im anderen Bauteil hergestellt. Hierbei ist es zweckmäßig, das Bauteil mit den Rippen bzw. Sicken härter im Werkstoff zu wählen als das Bauteil in das geformt wird.

Anhand eines bevorzugten Ausführungsbeispieles wird die Erfindung nachfolgend noch näher beschrieben. Es zeigen dabei:
- Figur 1:: eine Seitenansicht eines Bolzens mit entsprechender Mutter im Querschnitt
- Figur 2:: eine Draufsicht auf den Endbereich des Bolzens nach Figur 1,
- Figur 3:: einen Querschnitt durch den Endbereich des Bolzens entlang der Linie III-III und
- Figur 4:: eine Ansicht des Endbereiches des Bolzens aus Figur 2 in Blickrichtung X.

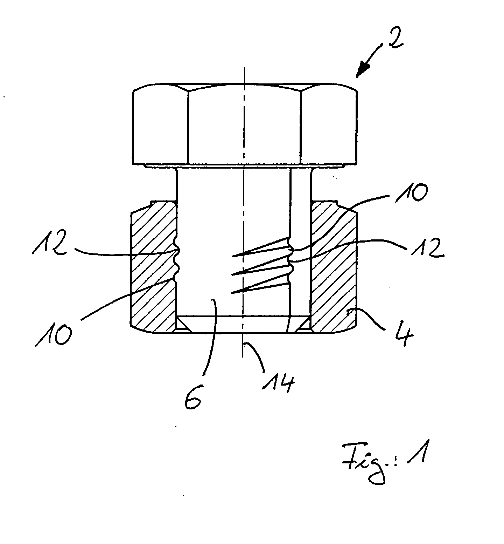

Figur 1 zeigt eine Welle-Nabe-Verbindung in Form eines Bolzens 2 und einer mit diesem zusammenwirkenden Mutter 4. Der Bolzen 2 ist in einer Seitenansicht dargestellt, während die Mutter 4 im Querschnitt gezeigt ist. Nachfolgend wird der Schaft des Bolzens 2 als Welle 6 bezeichnet und die Mutter als Nabe 4. Auf der Außenumfangsfläche der Welle 6 sind radial ansteigende Keilflächen angeordnet, wobei in Figur 1 die Keilfläche 8 gezeigt ist. Die Keilfläche 8 ist in Umfangsrichtung radial ansteigend ausgebildet. Auf der Innenumfangsfläche der Nabe 4 sind entsprechende Keilflächen (nicht dargestellt) ausgebildet, wobei die Steigungen der nach einem Fügen von Welle und Nabe sich gegenüberliegenden Keilflächen gleich sind. Auf der Außenumfangsfläche der Welle 6 sind im Einspannbereich zwischen Nabe 4 und Welle 6 mehrere zusätzliche, in axialer Richtung der Welle hintereinander abwechselnd angeordnete Erhebungen und Vertiefungen vorgesehen, die auch als Rippen 10 und Sicken 12 bezeichnet werden.

Die Rippen 10 und Sicken 12 dienen zur Axialsicherung der Welle-Nabe-Verbindung, insbesondere bei dynamischer Banspruchung der Welle-Nabe-Verbindung in Axialrichtung. Wenn, wie beim hier gezeigten Beispiel, die Rippen 10 und die Sicken 12 unter einem bestimmten Winkel schräg zur Längsachse der Welle 6 verlaufend ausgebildet sind, kann zusätzlich zu der Axialsicherung eine Vorspannkraft bzw. axiale Kraftkomponente erzeugt werden, indem das Zusammenspiel zwischen Nabe 4 und Welle 6 ähnlich dem einer üblichen Gewindeschraube erfolgt.

Die angestrebte Axialsicherung über die Rippen 10 und die Sicken 12 wird dadurch erreicht, daß sich beim Erzeugen eines Preßverbandes zwischen Mutter 4 und Welle 6, die Rippen 10 in das Material der Innenumfangsfläche der Mutter 4 einpressen bzw. eindrücken und somit zu dem grundsätzlichen Reibschluß auch einen Formschluß erzeugen. Der Formschluß ergibt sich durch Materialverdrängung des den Rippen 10 gegenüberliegenden Materials des anderen Bauteils, hier der Mutter 4, wie dies auf der linken Seite in der Figur 1 gezeigt ist. Das im Bereich der Rippe 10 verdrängte Material dringt dann in die den Rippen 10 benachbarten Sicken 12 ein, so daß letzlich eine Art Gewinde in dem entsprechenden Bereich der Rippen 10 bzw. Sicken 12 entsteht.

Wie in Figur 1 auf der rechten Seite dargestellt, verlaufen die Rippen 10 und Ausnehmungen 12 bevorzugt unter einem Winkel zur Längsachse 14 der Welle 6 bzw. Nabe 4. Dieser schräge Verlauf bedingt neben der Axialsicherung aufgrund der Rippen 10 und der Ausnehmungen 12 eine zusätzliche axiale Kraftkomponente bzw. Vorspannkraft in Längsachsenrichtung 14 bei Relativverdrehung der Welle 6 zur Mutter 4 nach Berührung der sich gegenüberliegenden Keilflächen von Welle 6 und Nabe 4.

Aus Figur 1 ist auch ersichtlich, daß sich die Erhebungen bzw. Rippen 10 und Ausnehmungen bzw. Sicken 12 auf der Keilfläche 8 befinden und sich bis zum Ende der Keilfläche 8, d.h. bis zu deren höchsten radialen Erhebung erstrecken.

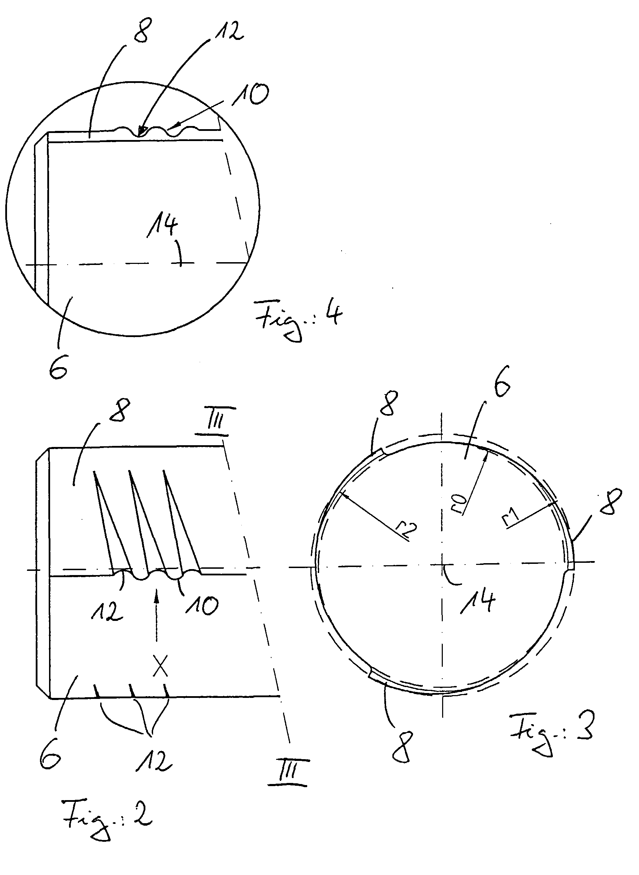

Figur 2 zeigt ebenfalls die zuvor beschriebene Anordnung der Rippen 10 und Sicken 12, wobei aus Figur 2 noch ersichtlich ist, daß sich noch weitere Rippen 10 bzw. Sicken 12 im Bereich einer anderen Keilfläche befinden, die axial hintereinander angeordnete Rippen 10 und Sicken 12 in Umfangsrichtung somit abschnittsweise angeordnet sind. Figur 2 zeigt auch, daß der radiale Abstand der Rippen 10 sowie der radiale Abstand der Sicken 12 von der Achse der Welle 6 in deren Umfangsrichtung konstant ausgebildet ist. In Figur 2 wird dies deutlich durch die nach oben spitz zulaufende Konfiguration der Sicken 12, die sich deshalb ergibt, weil die entsprechende Keilfläche 8 in Umfangsrichtung radial ansteigt.

Dies zeigt auch der Schnitt entlang der Linie III-III aus Figur 2 gemäß Figur 3. Mit r₀ bezeichnet ist dort der minimale Radius der Keilflächen, d.h. deren kleinster radialer Abstand zur Längsachse 14 der Welle 6; r₁ hingegen zeigt den maximalen radialen Abstand der Keilfläche 8, also deren maximalen radialen Abstand zur Längsachse 14 der Welle 6; r₂ ist der über den Umfang konstante radiale Abstand der Rippen 10. Figur 3 zeigt eine bevorzugte Ausgestaltung mit drei Keilflächen 8 und drei Abschnitten von in axialer Richtung hintereinander angeordneten Rippen 10 und Sicken 12, die im Verlauf einer Keilfläche beginnen und am Ende einer jeden Keilfläche, also bei Erreichen des Radius r₁ enden.

Figur 4 zeigt schließlich eine Ansicht in Richtung des Pfeiles X aus Figur 2. Es handelt sich dabei um die Ansicht des Abschlußbereiches einer der Keilflächen 8 unter Darstellung der radialen Erstreckung der Rippen 10 und Sicken 12 bezüglich der Längsachse 14 der Welle 6. Figur 4 zeigt die bevorzugte Ausgestaltung des Rippen- und Sickenmaßes, welches für in Axialrichtung hintereinander angeordnete Rippen und Sicken stets gleich sein soll. Das Rippenmaß ist für den Bolzen 6 die Differenz zwischen dem radialen Abstand der Rippe 10 (r₂) und dem radialen Abstand der Keilfläche 8 an der betreffenden Stelle (hier: r₁). Das Sickenmaß ergibt sich in entsprechender Weise für die radiale Beabstandung des tiefsten Punktes der Sicke 12 bezüglich des entsprechenden radialen Abstandes der Keilfläche 8, wiederum betrachtet für den Bolzen 6.

### Bezugszeichenliste

- 2: Bolzen
- 4: Mutter/Nabe
- 6: Welle
- 8: Keilfläche
- 10: Erhöhung/Rippe
- 12: Ausnehmung/Sicke
- 14: Längsachse
- r₀: minimaler radialer Abstand der Keilfläche 8 von der Längsachse 14 bezogen auf den Bolzen 6
- r₁: maximaler radialer Abstand der Keilflächen 8 von der Längsachse 14 bezogen auf den Bolzen 6
- r₂: radialer Abstand von Rippe 10 zur Längsachse 14 bezogen auf den Bolzen 6

## Patentansprüche

1. Welle-Nabe-Verbindung, insbesondere in Form eines Bolzens (2) und einer mit diesem zusammenwirkenden Mutter (4),
bei welcher auf der Außenumfangsfläche der Welle (6) einerseits wenigstens eine in Umfangsrichtung radial ansteigende Keilfläche (8) und andererseits auf der Innenumfangsfläche der Nabe (4) eine entsprechende Anzahl von ebensolchen Keilflächen angeordnet sowie
die Steigungen der nach einem Fügen von Welle (6) und Nabe (4) sich gegenüberliegenden Keilflächen (8) gleich sind,
wobei auf der Außenumfangsfläche der Welle (6) und/oder der Innenumfangsfläche der Nabe (4) in axialer Richtung der Welle (6) bzw. Nabe (4) zusätzlich zu den Keilflächen (8) und auf diesen zumindest eine Erhebung (10) und/oder Vertiefung (12) angeordnet ist.

2. Welle-Nabe-Verbindung nach Anspruch 1, bei welcher der radiale Abstand (r₂) der Erhebung (10) und/oder der Vertiefung (12) zur Achse (14) der Welle (6) bzw. Nabe (4) in deren Umfangsrichtung konstant und/oder radial ansteigend ausgebildet ist.

3. Welle-Nabe-Verbindung nach Anspruch 1 oder 2, bei welcher die Erhebung (10) und/oder Vertiefung (12) lediglich abschnittsweise über einen Teil der jeweiligen Umfangsfläche von Welle (6) bzw. Nabe (4) angeordnet sind.

4. Welle-Nabe-Verbindung nach einem der Ansprüche 1 bis 3, bei welcher mehrere Erhebungen (10) und/oder Vertiefungen (12) hintereinander auf der Welle (6) bzw. Nabe (4) angeordnet sind.

5. Welle-Nabe-Verbindung nach einem der Ansprüche 1 bis 4, bei welcher die Erhebungen (10) und/oder Vertiefungen (12), im Längsschnitt von Welle (6) bzw. Nabe (4) gesehen, abgerundet oder spitz zulaufend ausgebildet sind.

6. Welle-Nabe-Verbindung nach einem der Ansprüche 1 bis 5, bei welcher die Erhebungen (10) und/oder Vertiefungen (12) am Beginn einer Keilfläche (8) angeordnet sind.

7. Welle-Nabe-Verbindung nach einem der Ansprüche 1 bis 6, bei welcher der radiale Abstand der Erhöhungen von der Achse (14) der Welle (6) bzw. Nabe (4) kleiner oder größer ist als der maximale radiale Abstand der Keilflächen (8).

8. Welle-Nabe-Verbindung nach einem der Ansprüche 1 bis 7, bei welcher die Erhöhungen (10) und/oder Vertiefungen (12) unter einem bestimmten Winkel zur Längsachse (14) der Welle (6) bzw. Nabe (4) geneigt ausgebildet sind.

9. Welle-Nabe-Verbindung nach einem der Ansprüche 1 bis 8, bei welcher das Material der Keilfläche (8), die nach dem Fügen von Welle (6) und Nabe (4) den Erhöhungen (10) und/oder Vertiefungen (12) gegenüberliegt, weicher ist als das Material der Erhöhungen (10) und/oder Vertiefungen (12).
